# EUROPEAN PATENT APPLICATION

(11) **EP 4 603 603 A1**
(43) Date of publication of application: **20.08.2025**
(21) Application number: 23894273.4
(22) Date of filing: 05.10.2023
(51) Int. Cl.: C21B 7/24, F27D 21/00, G01K 11/26

(54) **TEMPERATURE-MEASURING DEVICE AND TEMPERATURE-MEASURING METHOD**

(30) Priority: 21.11.2022 JP 2022185382
(71) Applicant: JFE Steel Corporation, Tokyo 100-0011 (JP)
(72) Inventor: YAMAHIRA, Naoshi, Tokyo 100-0011 (JP); ITO, Tomohiko, Tokyo 100-0011 (JP); KASHIHARA, Yusuke, Tokyo 100-0011 (JP); TERUI, Koki, Tokyo 100-0011 (JP)
(74) Representative: Hoffmann Eitle
(86) International application number: PCT/JP2023/036391
(87) International publication number: WO 2024/111261

(57) **Abstract**

To a measuring instrument 11 which has a shell portion 12 and a hollow body, the shell portion 12 being made of metal, covering an internal space, and being provided with a through-hole 13 connecting the internal space 14 to an outside, an electromagnetic wave having a resonant frequency of the measuring instrument 11 is transmitted to allow the measuring instrument 11 to resonate, and the electromagnetic wave sent from the measuring instrument 11 having resonated is received. The measuring instrument 11 is charged into the equipment that is a temperature measurement object, and it expands and shrinks depending on a temperature, whereby the resonant frequency varies. As a result, an internal temperature of the equipment such as a blast furnace is measured without destroying the equipment.

## Description

### TECHNICAL FIELD

The present invention relates to a temperature-measuring apparatus and a temperature-measuring method.

### BACKGROUND ART

Generally, in a blast furnace operation, ore (e.g., lump ore, sintered ore, or pallet) and coke as raw materials are alternately charged from a top part of a blast furnace and deposited in a laminated state.

The coke deposited at a lower part in the blast furnace is gasified by hot air blown from a tuyere of the blast furnace and disappears. In addition, reducing gas generated through gasification of the coke reduces and melts the ore. Consequently, the raw materials in the blast furnace descend (move down), and the layer height decreases. In order to keep the layer height at a fixed height, the ore and the coke are alternately charged from the top part of the blast furnace.

Patent Literature 1 discloses "a pseudo grain including an RFID tag built therein, the RFID tag being charged into a bell-less blast furnace having a distribution chute at a top of the furnace together with a raw material through a conveyor and being used to grasp a charging state of the raw material" ([Claim 1]).

Patent Literature 2 discloses "an apparatus for detecting behavior of a charged material in a blast furnace, the apparatus transmitting and receiving microwaves to and from a side surface of the blast furnace to acquire an image of the charged material in the blast furnace and measuring movement of the charged material in the blast furnace" ([Claim 1]).

### CITATION LIST

### PATENT LITERATURE

Patent Literature 1: JP 2012-52151 A
Patent Literature 2: JP 2008-13814 A

### SUMMARY OF INVENTION

### TECHNICAL PROBLEMS

A temperature distribution in a blast furnace is useful information for understanding progress of a reduction reaction.

However, the techniques disclosed in Patent Literatures 1 and 2 are not techniques for measuring an internal temperature of equipment such as a blast furnace.

In order to measure an internal temperature of equipment, it may be required to destroy part of the equipment (for example, make holes), but in this case, the durability of the equipment may deteriorate.

The present invention has been made in view of the foregoing and has an object of measuring an internal temperature of equipment such as a blast furnace without destroying the equipment.

### SOLUTION TO PROBLEMS

The present inventors found, through an earnest study, that employing the configuration described below enables the achievement of the above-mentioned object. The invention has been thus completed.

Specifically, the present invention provides the following [1] to [10].
[1] A temperature-measuring apparatus comprising:
   a measuring instrument which has a shell portion and a hollow body, the shell portion being made of metal, covering an internal space, and being provided with a through-hole connecting the internal space to an outside;
   a transmission unit that transmits an electromagnetic wave having a resonant frequency of the measuring instrument to the measuring instrument and allows the measuring instrument to resonate; and
   a reception unit that receives an electromagnetic wave sent from the measuring instrument having resonated,
   wherein the measuring instrument is charged into equipment that is a temperature measurement object, and the measuring instrument expands and shrinks depending on a temperature, whereby the resonant frequency changes.
[2] The temperature-measuring apparatus according to [1], wherein the equipment is a furnace into which a raw material is charged.
[3] The temperature-measuring apparatus according to [2],
   wherein the furnace has a charging port for charging the raw material into the furnace, and
   the transmission unit is disposed at the charging port.
[4] The temperature-measuring apparatus according to [2] or [3], wherein the furnace is a blast furnace.
[5] A temperature-measuring method comprising measuring an internal temperature of the equipment by using the temperature measuring apparatus according to [1].
[6] The temperature-measuring method according to [5],
   wherein a raw material is charged into the equipment, and
   the measuring instrument is charged into the equipment together with the raw material.
[7] The temperature-measuring method according to [5] or [6], wherein an internal temperature of the equipment is controlled based on the temperature that is measured.
[8] The temperature-measuring method according to any one of [5] to [7], wherein the equipment is a furnace into which the raw material is charged.
[9] The temperature-measuring method according to [8],
   wherein the furnace has a charging port for charging the raw material into the furnace, and
   the transmission unit is disposed at the charging port.
[10] The temperature-measuring method according to [8] or [9], wherein the furnace is a blast furnace.

### ADVANTAGEOUS EFFECTS OF INVENTION

The present invention makes it possible to measure an internal temperature of equipment such as a blast furnace without destroying the equipment.

### BRIEF DESCRIPTION OF DRAWINGS

[FIG. 1] FIG. 1 is a cross-sectional view schematically showing a blast furnace.
[FIG. 2] FIG. 2 is a cross-sectional view schematically showing a state where a plurality of measuring instruments are charged from a top part (charging port) into the blast furnace.
[FIG. 3] FIG. 3 is an enlarged cross-sectional view showing a part of the blast furnace into which the plurality of measuring instruments are charged.
[FIG. 4] FIG. 4 is a perspective view of the measuring instrument a part of which is cut out.
[FIG. 5] FIG. 5 is a graph showing a temperature characteristic of a resonant frequency of the measuring instrument.
[FIG. 6] FIG. 6 is a perspective view of a measuring instrument a part of which is cut out, the measuring instrument having cross-shaped through-holes.
[FIG. 7] FIG. 7 is an enlarged cross-sectional view showing the blast furnace being provided at its inside with a reception unit.
[FIG. 8] FIG. 8 is an enlarged cross-sectional view showing another example of the blast furnace being provided at its inside with reception units.

### DESCRIPTION OF EMBODIMENTS

A temperature-measuring apparatus is described below with reference to the drawings. The following description also covers a temperature-measuring method.

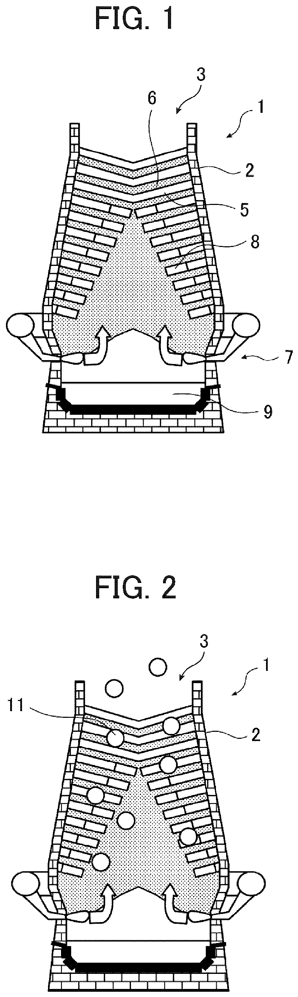

FIG. 1 is a cross-sectional view schematically showing a blast furnace 1.

The blast furnace 1 is equipment for obtaining molten iron 9 from iron ore (hereinafter also referred to as "ore").

A body 2 of the blast furnace 1 is made of an iron shell and a refractory brick.

Ore and coke as raw materials are alternately charged into the blast furnace 1 from a charging port 3 disposed at the top part of the blast furnace 1. The charging port 3 is a part for charging raw materials into the blast furnace 1, and when the raw materials are charged, they may temporarily come into contact with the charging port 3; however, in principle, the charging port 3 is a part with which the raw materials do not make contact during the operation of the blast furnace **1.** Although the charging port 3 of the blast furnace 1 is not actually opened, FIG. 1 conveniently shows the charging port 3 being opened (the figures other than FIG. 1 show the port in the similar manner). Raw materials are charged by using, for example, a charging conveyor (not shown).

Raw materials having been charged are deposited in a laminated state inside the blast furnace **1.** That is, an ore layer 5 and a coke layer 6 are alternately laminated.

The blast furnace 1 is provided at its lower part with a tuyere 7. Hot air is blown from the tuyere 7 into the blast furnace 1 and passes a gap between the ore layer 5 and the coke layer 6 (a gap between the raw materials).

The coke layer 6 is gasified by hot air blown from the tuyere 7. The ore layer 5 is reduced and melted by reducing gas, such as CO, generated through gasification of the coke layer 6.

Consequently, the ore layer 5 and the coke layer 6 descend (move down) inside the blast furnace **1.** Ore and coke are alternately charged from the top part (charging port 3) of the blast furnace 1 such that the height of the ore layer 5 and the coke layer 6 is maintained to be constant.

The ore layer 5 is reduced and melted to thereby produce the molten iron 9. The molten iron 9 thus produced is discharged from the bottom of the blast furnace **1.** The region where the ore layer 5 is completely melted is called a fusing zone 8.

For production of the molten iron 9, it is preferable to maintain a stable reduction reaction inside the blast furnace **1.** A temperature distribution in the inside of the blast furnace 1 is a piece of useful information for understanding progress of a reduction reaction.

However, since the inside of the blast furnace 1 is a high temperature and high pressure environment, it is difficult to charge, into the blast furnace 1, for example, a temperature sensor (not shown) that is wired-connected to the outside of the blast furnace **1.**

When the temperature sensor uses a battery, it is difficult to measure a temperature exceeding a heat resistance limit of the battery.

Therefore, in the present embodiment, the measuring instrument 11 to be described later is charged from the top part (charging port 3) of the blast furnace 1 into the blast furnace 1.

FIG. 2 is a cross-sectional view schematically showing a state where a plurality of measuring instruments 11 are charged from the top part (charging port 3) into the blast furnace 1. In FIG. 2, the measuring instruments 11 are illustrated in an enlarged size in order to make it easier to visibly recognize the measuring instrument 11.

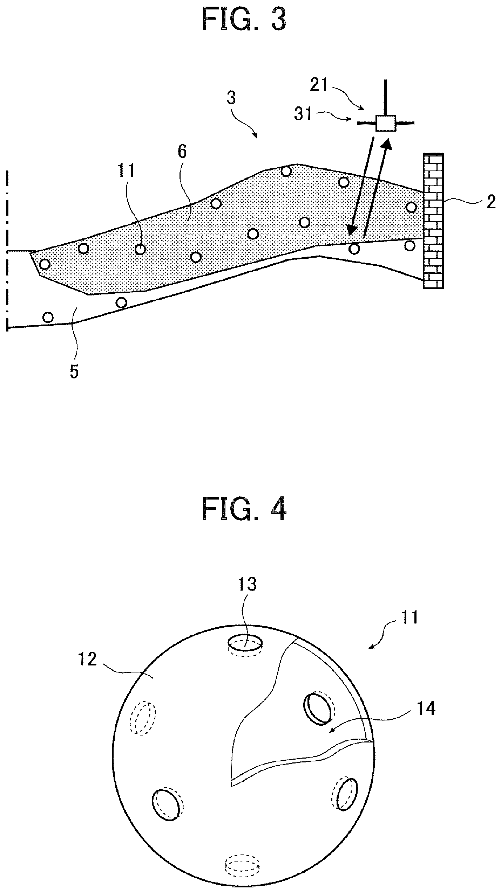

FIG. 3 is an enlarged cross-sectional view showing a part of the blast furnace 1 into which a plurality of measuring instruments 11 are charged.

The top part (charging port 3) of the blast furnace 1 is provided with a transmission unit 21 that transmits an electromagnetic wave to the measuring instrument 11 and a reception unit 31 that receives the electromagnetic wave sent from the measuring instrument 11.

The transmission unit 21 is composed of parts such as a transmission antenna and a transmitter. The reception unit 31 is composed of parts such as a reception antenna and a receiver.

Respective members constituting the transmission unit 21 and the reception unit 31 may be different members or the same member. For example, the transmission antenna and the reception antenna may be a common antenna as shown in FIG. 3.

As an electromagnetic wave irradiated from the transmission unit 21 to the measuring instrument 11, microwave (radio wave having a frequency of 300 MHz to 300 GHz) is preferably used.

FIG. 4 is a perspective view of the measuring instrument 11 a part of which is cut out.

The measuring instrument 11 is a hollow body. That is, the measuring instrument 11 has a shell portion 12 made of metal covering an internal space 14. The shell portion 12 is provided with through-holes 13 connecting the internal space 14 and the outside.

All objects have a frequency called a natural frequency where they easily vibrate. When a standing still object continuously receives an external force (periodic force) having the natural frequency of that object, it begins to vibrate and eventually vibrates largely (work by the external force is effectively absorbed by the object, and the object vibrates intensely). This phenomenon is called resonance. The natural frequency is also called resonant frequency.

The measuring instrument 11 composed of the shell portion 12 made of metal has a resonant frequency.

The resonant frequency of the measuring instrument 11 is determined by, for example, the shape of the shell portion 12, the material of the shell portion 12, the thickness of the shell portion 12, the number of the through-holes 13, and the positions of the through-holes 13.

An electromagnetic wave such as microwave is transmitted (emitted) from the transmission unit 21 to the measuring instrument 11. The transmission unit 21 has a configuration capable of changing a frequency of an electromagnetic wave to be sent as appropriate. An electromagnetic wave having the resonant frequency of the measuring instrument 11 is transmitted from the transmission unit 21, whereby the measuring instrument 11 resonates.

When the shell portion 12 of the measuring instrument 11 has no through-hole 13, the electromagnetic wave having been transmitted from the transmission unit 21 is totally reflected easily (hardly absorbed) by the shell portion 12.

However, since the shell portion 12 has the through-holes 13, the electromagnetic wave having been transmitted from the transmission unit 21 is not totally reflected and is thus effectively absorbed. That is, the measuring instrument 11 (shell portion 12) easily resonates.

The measuring instrument 11 having resonated sends an electromagnetic wave having a resonant frequency. The electromagnetic wave having the resonant frequency and sent from the measuring instrument 11 is received by the reception unit 31.

Since the shell portion 12 of the measuring instrument 11 is made of metal, it expands and shrinks depending on a temperature, and due to this expansion and shrinkage, the resonant frequency of the measuring instrument 11 varies.

That is, the resonant frequency of the measuring instrument 11 has a temperature characteristic.

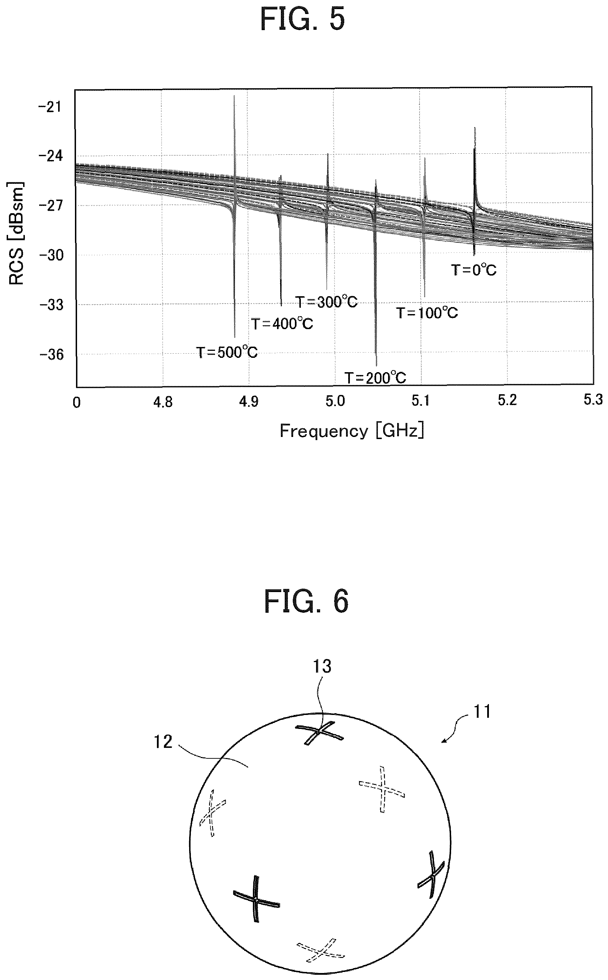

FIG. 5 is a graph showing the temperature characteristic of the resonant frequency of the measuring instrument 11.

More specifically, the graph of FIG. 5 is a graph of simulation in which an electromagnetic wave is emitted from a radar (not shown) to the measuring instrument 11 at various temperatures, and the frequency of the electromagnetic wave is varied. Note that since this is the simulation result of the case where the measuring instrument 11 is irradiated with an electromagnetic wave from various angles, a plurality of graph lines are illustrated.

In the graph of FIG. 5, the horizontal axis represents frequency (unit: GHz), and the vertical axis represents RCS value (unit: dBsm). Radar cross-section (RCS) is a scale of the ability to reflect an electromagnetic wave in a direction of an antenna of the radar when the electromagnetic wave is emitted from the antenna.

As shown in the graph of FIG. 5, when the measuring instrument 11 is irradiated with an electromagnetic wave having a specific frequency, the RCS value varies greatly, i.e., resonates, and a peak is observed. The peak position varies depending on a temperature. Specifically, as the temperature becomes higher, the peak position shifts to the low frequency side.

Accordingly, it is discovered that the resonant frequency of the measuring instrument 11 varies depending on the temperature of the measuring instrument 11.

Therefore, since the measuring instrument 11 sends an electromagnetic wave having a specific frequency at a specific temperature, by receiving the electromagnetic wave sent from the measuring instrument 11 with the reception unit 31, the temperature of the measuring instrument 11 can be specified. That is, the internal temperature of the blast furnace 1 can be measured without, for example, destroying the body 2 of the blast furnace 1.

The distance to the measuring instrument 11 can be measured from the time period from transmission of the electromagnetic wave from the transmission unit 21 to reception of the electromagnetic wave by the reception unit 31.

In addition, for example, a plurality of reception units 31 are disposed at different positions in the circumferential direction of the top part (charging port 3) of the blast furnace 1. The position of the measuring instrument 11 can be specified by using the difference in the time periods until receiving the electromagnetic wave sent from the measuring instrument 11 between the plurality of reception units 31. In this way, the temperature distribution in the inside of the blast furnace 1 can be found.

The measuring instrument 11 having been charged into the blast furnace 1 descends according to down movement of the raw materials. Along with the down movement of the raw materials, the temperature of each measuring instrument 11 is successively specified and collected.

As a result, the temperature variation over time in the blast furnace 1 can be found.

The internal temperature of the blast furnace 1 may be controlled based on the temperature in the blast furnace 1 measured using the measuring instrument 11.

A method of controlling the temperature is not particularly limited, and examples thereof include a method in which a charging amount of the raw materials is adjusted and a method in which an amount of hot air blown from the tuyere 7 is adjusted.

A method of charging the measuring instrument 11 into the blast furnace 1 is not particularly limited, and for example, the measuring instrument 11 may be transported using a charging conveyor (not shown) for charging the raw materials (ore and coke) and charged into the blast furnace 1 together with the raw materials from the charging port 3.

When the size of the measuring instrument 11 is greatly different from those of the raw materials (ore and coke), the measuring instruments 11 tend to be unevenly distributed in the blast furnace 1.

Therefore, it is preferable that the grain size of the measuring instrument 11 (shell portion 12) is close to those of the raw materials (normally, 30 to 60 mm) from the viewpoint of avoiding uneven distribution in the blast furnace 1.

Specifically, the difference between the grain size of the measuring instrument 11 (shell portion 12) and the grain size of the raw material is preferably not more than 10 mm and more preferably not more than 5 mm.

The grain size refers to an average grain size determined by the laser diffraction-scattering method.

It suffices if the material of the shell portion 12 is metal having conductivity, and it is preferable to use metal having a melting point lower than the highest internal temperature of the blast furnace 1.

With this configuration, the measuring instrument 11 (shell portion 12) is melted before the highest temperature inside the blast furnace 1 is reached, so it can be prevented from causing clogging inside the blast furnace 1 and giving damage to the blast furnace 1.

While FIG. 4 shows the measuring instrument 11 in which the completely spherical shell portion 12 is provided with six perfect circular through-holes 13 as an example, the shape of the shell portion 12, the number of the through-holes 13, the shape of the through-hole 13 and the like are not limited thereto.

Examples of the shape of the shell portion 12 include a spherical shape such as completely spherical shape and spheroidal shape; a regular polyhedron shape such as a regular hexahedron shape and a regular dodecahedron shape; and a polyhedral shape other than a regular polyhedron shape.

Among these, completely spherical shape or regular polyhedron shape is preferable, and a completely spherical shape is more preferable from the viewpoint of avoiding uneven distribution in the blast furnace 1.

The number and the positions of the through-holes 13 are not particularly limited.

However, when the number of the through-holes 13 is small or the plurality of through-holes 13 are unevenly distributed in the shell portion 12, the measuring instrument 11 may have high position dependency (behavior such as resonance tends to be different depending on the position and the direction of the measuring instrument 11 inside the blast furnace 1).

Therefore, from the viewpoint of reducing the position dependency of the measuring instrument 11, the number of the through-holes 13 is preferably not less than 2, more preferably not less than 4, and further preferably not less than 6.

For the same reason, the plurality of through-holes 13 are preferably disposed at point-symmetrical positions with respect to the center of the shell portion 12.

FIG. 6 is a perspective view of a measuring instrument 11 a part of which is cut out, the measuring instrument 11 having cross-shaped through-holes 13. That is, six cross-shaped through-holes 13 are formed at point-symmetrical positions in the completely spherical shell portion 12 shown in FIG. 6.

Thus, the shape of the through-hole 13 is not particularly limited, and examples thereof include a completely spherical shape, an elliptical shape, a polygonal shape, and a cross shape.

However, from the viewpoint of reducing the position dependency of the measuring instrument 11, the shape of the through-hole 13 is preferably a completely spherical shape.

The internal space 14 of the measuring instrument 11 may be filled with a dielectric having no conductivity. As a result, the measuring instrument 11 (shell portion 12) is less likely to deform even when a pressure is applied from the outside thereof.

Among the measuring instruments 11 having the same grain size, as a relative permittivity of the dielectric filling the internal space 14 increases, the frequency at which the measuring instrument 11 resonates at each temperature becomes small. Therefore, the specific dielectric constant of the dielectric can be used as an adjustment parameter in determining the grain size of the measuring instrument 11 to be used and the frequency band of the electromagnetic wave to be transmitted to the measuring instrument 11.

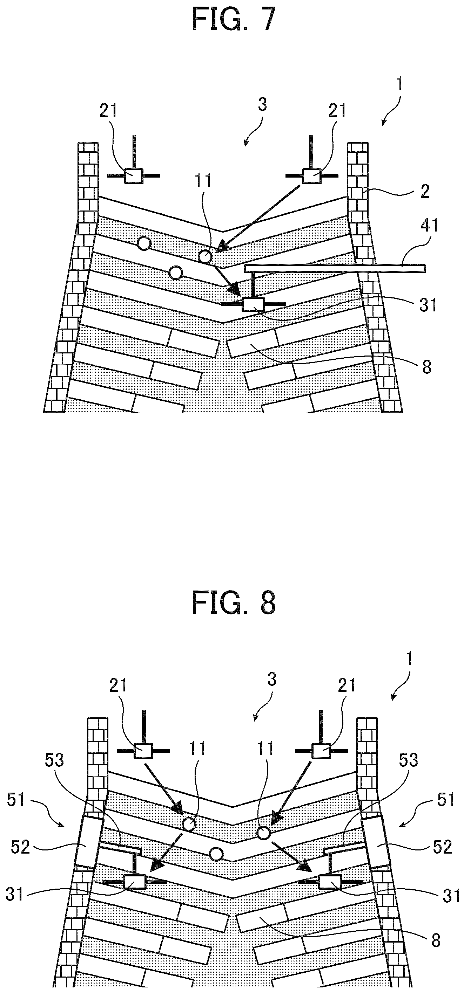

FIG. 7 is an enlarged cross-sectional view showing the blast furnace provided at its inside with the reception unit 31.

As described above, the measuring instrument 11 gradually descends according to down movement of the raw materials. Therefore, when the transmission unit 21 and the reception unit 31 are disposed at the charging port 3 (see FIG. 3), the distance where an electromagnetic wave is transmitted from the transmission unit 21 to reach the reception unit 31 via the measuring instrument 11 (hereinafter, also referred to as "distance D") also gradually increases. When the distance D is too large, the electromagnetic wave (in particular, the electromagnetic wave sent from the measuring instrument 11 and received by the reception unit 31) is easily attenuated.

Therefore, as shown in FIG. 7, while the transmission unit 21 is disposed at the charging port 3 of the blast furnace 1, the reception unit 31 is disposed inside the blast furnace 1 (more specifically, at a position to be in contact with the raw materials charged into the blast furnace 1). Thus, the distance D is substantially constant regardless of the position of the measuring instrument 11, so attenuation of the electromagnetic wave can be suppressed.

In FIG. 7, the reception unit 31 is attached to a tip of an insertion pipe 41.

The insertion pipe 41 is, for example, a sonde for inserting a probe (not shown) into the blast furnace 1 during gas sampling and is disposed to be movable in a horizontal direction in FIG. 7.

When the insertion pipe 41 is moved in the horizontal direction, the reception unit 31 attached to the tip of the insertion pipe 41 is also moved in the horizontal direction inside the blast furnace 1.

By moving the insertion pipe 41, for example, the reception unit 31 can be moved to the center position of the blast furnace 1 in use or can be pulled back to the position to be in contact with the body 2 (iron shell and refractory brick) of the blast furnace 1 in non-use.

FIG. 8 is an enlarged cross-sectional view showing another example of the blast furnace 1 provided at its inside with the reception units 31.

In FIG. 8, the plurality of reception units 31 are disposed at different positions in the circumferential direction inside the blast furnace 1, and each of the reception units 31 receives an electromagnetic wave sent from the measuring instrument 11. Thus, even when an electromagnetic wave sent from the measuring instrument 11 is attenuated, that electromagnetic wave is easily received.

The body 2 (iron shell and refractory brick) of the blast furnace 1 shown in FIG. 8 is provided with a plurality of holes 51 in the circumferential direction, and each hole 51 is closed with a lid 52. A projection 53 is formed at the inner side of the lid 52 (the interior side of the blast furnace 1), and the reception unit 31 is attached to the tip of the projection 53.

When the lid 52 to which the reception unit 31 is attached is fitted to the hole 51, the reception unit 31 can be disposed inside the blast furnace 1. Then, when the lid 52 is detached from the hole 51, the reception unit 31 can be easily taken out from the inside of the blast furnace 1 to perform maintenance and the like.

When the reception unit 31 is not used, it suffices if the lid 52 to which the reception unit 31 is not attached is fitted to the hole 51.

As described above, in FIGS. 7 and 8, the reception unit 31 is disposed inside the blast furnace 1, more specifically, at a position to be in contact with the raw materials having been charged into the blast furnace 1.

However, when the reception unit 31 makes contact with the melted raw materials, for example, it is easily damaged.

Therefore, the reception unit 31 is preferably disposed at least at a position not to be in contact with the fusing zone 8, and is more preferably disposed at a position higher than the upper end of the fusing zone 8 (the uppermost fusing zone 8 in the blast furnace 1).

As shown in FIGS. 7 and 8, a plurality of transmission units 21 may be disposed at different positions in the circumferential direction of the charging port 3 of the blast furnace 1.

With this configuration, by transmitting a synchronized electromagnetic wave from the plurality of transmission units 21, the intensity of the transmitted electromagnetic wave is enhanced, whereby the attenuation of the electromagnetic wave can be reduced.

As opposed to the configuration shown in FIGS. 7 and 8, the transmission unit 21 may be disposed inside the blast furnace 1 while the reception unit 31 may be disposed at the charging port 3 of the blast furnace 1.

However, since the transmission unit 21 sends a large amount of energy to the measuring instrument 11, each component such as a transmission antenna or a transmitter tends to be larger and is subjected to maintenance on many occasions. Since the maintainability is more excellent with a space that is not surrounded by the raw materials, the transmission unit 21 is disposed more preferably at the charging port 3 of the blast furnace 1 than inside the blast furnace 1 (at a position to be in contact with the raw materials having been charged into the blast furnace 1).

While the case where the internal temperature of the blast furnace 1 is measured by the measuring instrument 11 has been described above as an example, equipment as a temperature measurement object is not limited to the blast furnace 1.

The examples of the equipment as a temperature measurement object include equipment that is difficult to directly measure the internal temperature of the equipment for various reasons (the risk is high, the internal structure is complicated, etc.).

Since an electromagnetic wave is transmitted from the transmission unit 21 to the measuring instrument 11 having been charged into the equipment (and the reception unit 31 receives an electromagnetic wave sent from the measuring instrument 11), the equipment as a temperature measurement object may be opened.

As the equipment as above, a furnace in which a raw material (powdery raw material, granular raw material and the like) is charged is preferable, and specific examples thereof include, in addition to the blast furnace 1, a furnace (reaction furnace) whose internal temperature becomes high such as a coke furnace, a sintering furnace or an oxygen blast furnace (blast furnace using pure oxygen in place of hot air).

For example, in a coke furnace, coal as a raw material is charged from an upper side to an inside of a carbonization chamber and then roasted to become coke. The coke thus obtained is discharged to the outside by an extruder disposed at a lateral part of the carbonization chamber.

When the coke furnace (carbonization chamber) above is a temperature measurement object, for example, the transmission unit 21 is disposed at an upper side (at the charging port 3) of the carbonization chamber while the reception unit 31 is disposed at a lateral part of the carbonization chamber, and the measuring instrument 11 is charged into the carbonization chamber together with the coal as a raw material from the charging port 3.

Note that even if being a furnace, a converter into which metal is charged, for example, is basically excluded from the temperature measurement object.

### [REFERENCE SIGNS LIST]

- 1:: blast furnace
- 2:: body
- 3:: charging port
- 5:: ore layer
- 6:: coke layer
- 7:: tuyere
- 8:: fusing zone
- 9:: molten iron
- 11:: measuring instrument
- 12:: shell portion
- 13:: through-hole
- 14:: internal space
- 21:: transmission unit
- 31:: reception unit
- 41:: insertion pipe
- 51:: hole
- 52:: lid
- 53:: projection

## Claims

1. A temperature-measuring apparatus comprising:
a measuring instrument which has a shell portion and a hollow body, the shell portion being made of metal, covering an internal space, and being provided with a through-hole connecting the internal space to an outside;
a transmission unit that transmits an electromagnetic wave having a resonant frequency of the measuring instrument to the measuring instrument and allows the measuring instrument to resonate; and
a reception unit that receives an electromagnetic wave sent from the measuring instrument having resonated,
wherein the measuring instrument is charged into equipment that is a temperature measurement object, and the measuring instrument expands and shrinks depending on a temperature, whereby the resonant frequency changes.

2. The temperature-measuring apparatus according to claim 1, wherein the equipment is a furnace into which a raw material is charged.

3. The temperature-measuring apparatus according to claim 2,
wherein the furnace has a charging port for charging the raw material into the furnace, and
the transmission unit is disposed at the charging port.

4. The temperature-measuring apparatus according to claim 2 or 3, wherein the furnace is a blast furnace.

5. A temperature-measuring method comprising measuring an internal temperature of the equipment by using the temperature measuring apparatus according to claim 1.

6. The temperature-measuring method according to claim 5,
wherein a raw material is charged into the equipment, and
the measuring instrument is charged into the equipment together with the raw material.

7. The temperature-measuring method according to claim 5 or 6, wherein an internal temperature of the equipment is controlled based on the temperature that is measured.

8. The temperature-measuring method according to any one of claims 5 to 7, wherein the equipment is a furnace into which the raw material is charged.

9. The temperature-measuring method according to claim 8,
wherein the furnace has a charging port for charging the raw material into the furnace, and
the transmission unit is disposed at the charging port.

10. The temperature-measuring method according to claim 8 or 9, wherein the furnace is a blast furnace.
